# EUROPEAN PATENT APPLICATION

(11) **EP 4 583 253 A1**
(43) Date of publication of application: **09.07.2025**
(21) Application number: 24150150.1
(22) Date of filing: 03.01.2024
(51) Int. Cl.: H01M 10/625, B60L 50/64, B60L 58/26, H01M 10/6556, H01M 50/204, H01M 50/22, H01M 50/233, H01M 50/244, H01M 50/249, H01M 50/209

(54) **BATTERY TRAY AND METHOD FOR LOW PRESSURE DIE CASTING A BATTERY TRAY**

(71) Applicant: Nemak, S.A.B. de C.V., 66017 García, Nuevo León (MX)
(72) Inventor: CANTÚ GONZÁLEZ, Oscar Gerardo, 64979 Nuevo León (MX); SÁNCHEZ FERNÁNDEZ, Roberto, 64630 Monterrey (MX); CÓRDOVA JUÁREZ, Alejandro, 66165 Monterrey (MX); GONZÁLEZ VILLAREAL, José Alejandro, 64619 Monterrey (MX); NIETO VALDEZ, Gerado, 66036 Monterrey (MX)
(74) Representative: Cohausz & Florack

(57) **Abstract**

The invention relates to a battery tray for receiving at least one battery cell serving as a drive energy storage device for an electrically driven vehicle, wherein the battery tray (2) is connectable to a body of the vehicle, the battery tray (2) comprising: a substantially circumferential frame structure (4) comprising longitudinal sides (6) and transverse sides (8) for forming a receiving area (14) for the at least one battery cell, wherein the battery tray (2) is formed in one piece from a light metal material, in particular cast in one piece from a light metal material; wherein the receiving area (14) comprises an area of at least 0.5 m², preferably of at least 0.75 m², more preferably of at least 1 m². The invention also relates to a method for low pressure die casting a battery tray.

## Description

The invention relates to a battery tray for receiving at least one battery cell serving as a drive energy storage device for an electrically driven vehicle, wherein the battery tray is connectable to a body of the vehicle, the battery tray comprising: a substantially circumferential frame structure comprising longitudinal sides and transverse sides for forming a receiving area for the at least one battery cell, wherein the battery tray is formed in one piece from a light metal material, in particular cast in one piece from a light metal material, wherein the receiving area comprises an area of at least 0.5 m², preferably of at least 0.75 m², more preferably of at least 1 m².

The invention also relates to a method for low pressure die casting a battery tray, in particular an aforementioned battery tray, for receiving at least one battery cell serving as a drive energy storage device for an electrically driven vehicle, wherein the battery tray is connectable to a body of the vehicle, the method comprising: Feeding molten metal into a crucible through at least one feeding port, preferably heating the at least one molten metal fed into the crucible to keep the metal in a molten state, pressurizing the crucible filled with the molten metal so that the molten metal is forced into a mold cavity via at least one riser tube, preferably upholding the pressurization of the crucible until the molten metal in the mold is substantially solidified, and Opening the mold and ejecting the cast battery tray preferably via ejector pins from the mold, wherein the battery tray comprises a substantially circumferential frame structure comprising longitudinal sides and transverse sides for forming a receiving area for the at least one battery cell, and wherein the receiving area comprises an area of at least 0.5 m², preferably of at least 0.75 m², more preferably of at least 1 m².

Electric vehicles generally carry a plurality of battery cells and/or battery modules comprising battery cells that serve as a drive energy storage and provide the electrical energy required for driving. In particular, an electric vehicle may be an electric vehicle which is driven substantially exclusively by one or more electric motors. Alternatively, the aforementioned battery tray may be also used in a hybrid vehicle that has an internal combustion engine in addition to an electric motor.

Since battery cells and/or battery modules regularly have a relative high weight, their placement in the vehicle not only requires a certain support structure of the vehicle from a static point of view, but also additionally influences the dynamic forces occurring during driving the vehicle.

With regard to an improved driving behavior, placing the plurality of battery cells and/or battery modules in the floor area of the vehicle has proven to be an effective solution. To make this possible, battery cells, battery modules and/or battery trays have been proposed that are essentially flat and plate-like. Such battery cells, battery modules and/or battery trays may be arranged in the floor area of the vehicle and connected to the vehicle body.

Considerable demands are therefore placed on the static and dynamic load capacity of a battery tray. The battery tray should not only be able to support the individual battery cells and/or battery modules, but also absorb the dynamic loads that occur when the vehicle is in motion. The battery tray should also provide the best possible protection for the easily flammable battery cells and/or battery modules in the event of an accident and preferably enable a leak tight sealing of the battery cells and/or the battery modules.

Accordingly, battery trays are a crucial component for the safety and functionality of vehicles. Such requirements for the production of battery trays sometimes lead to the use of complex geometries for the battery trays. Due to the complex geometries of the battery trays, manufacturing processes are used in which several components have to be joined together in a complex manner, in particular welded together. Such manufacturing processes lead to increased costs in the production of the battery trays and, in addition, the connection points are often regarded as weak points in terms of mechanical load capacity and impermeability to the penetration of external media to the inside of the battery trays.

In addition to the aforementioned aspects, the aim is also to reduce the weight of the battery trays in question. This presents a further challenge, as the aforementioned requirements for the static and dynamic load-bearing capacity of battery trays need to be met despite a reduction in weight.

Furthermore, the battery tray manufacturing process has to take into account the integration of several functional components needed during the usage of the battery tray in a vehicle. For example, cooling channels may be arranged in a plate of the battery tray for enabling beneficial heat dissipation abilities of the battery tray. Achieving water tightness for said cooling channels often is connected to complex manufacturing processes and thus high manufacturing costs.

Therefore, the present invention is faced with the task of providing a battery tray and a method for manufacturing a battery tray which allows for advantageous mechanical properties of the battery tray while enabling a cost-efficient manufacturing of the battery tray.

According to a first aspect of the present invention, said problem is solved by an aforementioned battery tray, wherein the battery tray comprises a heat exchanging structure, and wherein the heat exchanging structure is formed as a battery (bottom) plate comprising at least one heat exchanging channel. The at least one heat exchanging channel may be in particular at least one cooling channel or at least one heating channel. Preferably, at least one cooling channel and at least one heating channel may be arranges simultaneously in the battery bottom plate.

By including the heat exchanging structure into the one-piece battery tray from a light metal material, manufacturing costs of the battery tray may be significantly reduced since certain assembly operations can be eliminated. Additionally, an improved sealing of the at least one battery cell to the outside of the battery tray and also an improved water tightness of the at least one heat exchanging channel may be provided.

Surprisingly, it has been shown that a battery tray with a relatively large receiving area, which is required in particular for mounting battery cells and/or battery modules of a purely electrically powered vehicle, can also be manufactured in one piece. On the one hand, the one-piece production of such a battery tray eliminates certain production steps, as individual components of the battery tray do not have to be subsequently connected to each other, and on the other hand, vulnerable connection areas of the battery tray can be avoided. A battery tray of this type has particularly advantageous properties in terms of bending stiffness and torsional rigidity. In addition, due to its one-piece nature, the battery tray offers advantageous properties for compliance with required tolerances, for achieving tightness requirements and for the ratio of the weight of the battery tray to the available surface area for battery cells. In particular, the battery tray according to the invention can provide an advantageous ratio between the space for battery modules to be accommodated and the weight of the battery tray itself.

In a preferred embodiment, the battery tray has a weight in a range of less than 70 kg, in particular in a range of less than 60 kg, especially preferably in a range of less than 50 kg. This enables further optimization of the ratio between the weight of the battery tray and the space for battery cells and/or battery modules to be accommodated. In particular, the battery tray or the receiving area of the battery tray has an area of more than 2 m², preferably more than 2.1 m², particularly preferably more than 2.2 m², for accommodating battery cells and/or battery modules.

The area enclosed by the receiving area is preferably the area which, when the battery tray is installed in a vehicle, runs essentially horizontally between the circumferential frame structure and in which at least one battery cell can therefore be received. In particular, the surface of the receiving area is enclosed by the circumferential frame structure, the surface of the receiving area preferably being bounded by the inner side surfaces of the longitudinal sides and by the inner side surfaces of the transverse sides of the circumferential frame structure and thus extending in particular within the inner side surfaces of the longitudinal sides and the transverse sides of the frame structure.

Furthermore, it is preferred that the receiving area includes an area of at least 1.25 m², preferably of at least 1.5 m², in particular of at least 1.75 m², especially preferably of at least 2 m². For example, the longitudinal sides have a length of more than 1 m, in particular more than 1.2 m, especially preferably more than 1.5 m and/or the transverse sides have a length of more than 1 m, in particular more than 1.25 m, especially preferably more than 1.4 m.

Preferably, the circumferential frame structure is essentially rectangular, with the longitudinal sides each running essentially parallel to one another and/or with the transverse sides running essentially parallel to one another.

Preferably, the heat exchanging structure transfers the heat from the battery cells and/or battery modules arranged in the battery tray towards an outside of the battery tray. This is in particular enabled via a cooling and/or heating fluid which flows through the at least one cooling channel and/or the at least one heating channel.

A preferred embodiment is characterized in that the battery tray at least partly comprises a thin wall structure, wherein the thin wall structure comprises a wall thickness between 1 mm and 6 mm, preferably between 2 mm and 5 mm, more preferably between 3 mm and 4 mm. It is preferred that substantially all wall thicknesses of the entire battery tray lie in the aforementioned thickness range. Through casting the battery tray in one piece, in particular in a low pressure die casting, core package casting or a combination of both methods, said thin wall thicknesses may be enabled and thus a very light battery tray may be provided. It is further preferred that the wall thicknesses of the longitudinal sides and/or the wall thicknesses of the transverse side comprise the aforementioned wall thickness ranges.

Another preferred embodiment is characterized in that the at least one heat exchanging channel is arranged in the battery bottom plate in a meander-shaped form. Hereby, beneficial cooling abilities of the battery tray may be provided. Preferably, the at least one heat exchanging channel extends over substantially the entire width of the battery bottom plate. The width of the battery bottom in particular corresponds to the extension of the transverse sides of the battery tray.

Another preferred embodiment is characterized in that the at least one heat exchanging channel comprises a plurality of canals, wherein the plurality of canals preferably extends substantially parallel to the at least one transverse side. By providing a plurality of canals a sufficient heat exchanging, in particular a sufficient cooling and/or heating, over at least a part of the receiving area is enabled.

Preferably, the plurality of canals extends over substantially the entire width of the battery bottom plate to ensure an efficient heat exchanging, in particular a sufficient cooling and/or heating, of the battery cells arranged in the receiving area.

In order to enable a beneficial casting process, in particular a beneficial low pressure die casting process, a beneficial core package casting process or a combination of both, the end faces of the plurality of canals are open. Hereby, cores may be beneficially arranged in a casting mold to enable the casting of the plurality of canals in one piece together with the battery tray. Preferably, said open end faces of the plurality of canals may be closed via at least one separate part.

Another preferred embodiment is characterized in that at least two heat exchanging channels, in particular at least three heat exchanging channels, are arranged in the battery bottom plate. By arranging at least two heat exchanging channels, the heat exchanging of different areas of the battery tray may be adjusted separately. Hereby, different heat exchanging requirements of different areas of the battery cells arranged in the battery tray may be considered. If temperature sensors for example detect different temperatures of the battery cells in different areas of the battery tray, the flow of the cooling fluid and/or the heating fluid may be adjusted accordingly.

Preferably, the at least two heat exchanging channels, in particular the at least three heat exchanging channels, are fluidly not connected to each other in the cast battery tray. In particular, the at least two heat exchanging channels are not fluidly connected via the battery tray. If desired, the heat exchanging channels may be connected via an external part. Since the at least two heat exchanging channels are not fluidly connected, cooling fluid and/or heating fluid may be adjusted separately in the at least two heat exchanging channels.

According to another preferred embodiment, the frame structure, in particular at least one of the transverse sides of the frame structure, comprises a radiator structure, wherein the radiator structure preferably is integrally formed with the frame structure, in particular with at least one of the transverse sides of the frame structure. A separate radiator structure enables beneficial heat exchanging abilities of the battery tray. By including the separate radiator structure into the battery tray, a substantially leak tight radiator structure may be enabled and manufactured in a cost-effective way.

According to another preferred embodiment, the radiator structure comprises at least one water pump housing and at least one heat exchanging element, wherein the at least one heat exchanging element is formed by meander-shaped heat exchanging channels. By suppling at least one (water) pump housing integrally in the battery tray, a pump may be easily arranged in the battery tray. Via the heat exchanging channels, heat may be transferred from the battery tray and/or the battery cells to the fluid arranged in the heat exchanging channels beneficially.

According to another preferred embodiment, the radiator structure is integrally formed in the side surface of the frame structure, in particular in the side surface of the transverse side, facing away from the receiving area. By providing the radiator structure in the side surface of the frame structure facing away from the receiving area, the radiator structure is easily accessible from an outside of the battery tray.

Preferably, the radiator structure is integrated into the profile structure of the frame structure. Furthermore, it is preferred that the pump housing of the radiator structure is arranged below a profile structure of the frame structure.

According to another preferred embodiment, the frame structure comprises at least one passage for arranging at least one device, in particular connecting means for electrically connecting the at least one battery cell. This makes it possible to take into account the passages required in the operation of the battery tray cast part during manufacture, so that these do not have to be introduced subsequently in a separate manufacturing step. This is also advantageous for the mechanical properties of the battery tray cast part.

Preferably, the frame structure comprises at least one housing structure, preferably a plurality of housing structures, wherein the at least one housing structure is integrally formed with the frame structure. The at least one housing structure may at least partly house cooling and/or heating fluids and at least one control device for the at least one battery cell and/or the at least one battery module. Preferably, the frame structure comprises several housing structures so that cooling and/or heating fluids as well as several control devices may be arranged in the battery tray in a beneficial manner. The at least one control device may be at least one valve, at least one sensor, in particular at least one current, voltage and/or temperature sensor, at least one battery management module, at least one charging management module, at least one electric motor drive, at least one vehicle stability system and/or at least one motor management unit.

According to another preferred embodiment, the battery tray comprises at least one transverse beam and/or at least one longitudinal beam for stiffening the battery tray and/or for connecting the battery tray to the body of the vehicle; and wherein the at least one transverse beam preferably extends essentially parallel to at least one transverse side and/or the at least one longitudinal beam extends essentially parallel to at least one longitudinal side. By providing at least one transverse beam and/or at least one longitudinal beam, the battery tray can be further reinforced in terms of its static and dynamic properties. The at least one transverse beam and/or the at least one longitudinal beam can also be used to connect the battery tray to the body of a vehicle. In particular, the at least one transverse beam and/or the at least one longitudinal beam can be used to provide sections within the frame structure of the battery tray that can be used to accommodate individual battery cells and/or battery modules.

According to another preferred embodiment, at least one connecting section for connecting the battery tray to the body of the vehicle is arranged in an intersection region of the at least one transverse beam with the at least one longitudinal beam. Such positioning is advantageous from a manufacturing point of view, in particular from a casting point of view, whereby a particularly stable connection to the body of the vehicle can also be provided. Preferably, the at least one connecting section is essentially cylindrical in shape.

According to another preferred embodiment, the height of the at least one transverse beam varies along the longitudinal extent of the at least one transverse beam and/or the height of the at least one longitudinal beam varies along the longitudinal extent of the at least one longitudinal beam. In this way, the height of the at least one transverse beam and/or the at least one longitudinal beam required at the respective point to improve the properties or to connect the battery tray to the body can be provided. This makes it possible to reduce the overall material used and the weight of the battery tray. The height of the at least one transverse beam and/or the at least one longitudinal beam preferably refers to the extension of the at least one transverse beam and/or the at least one longitudinal beam essentially orthogonal to the direction of extension of the at least one transverse beam and/or the at least one longitudinal beam.

Another preferred embodiment is characterized in that the frame structure at least partly comprises a profile structure for stiffening the battery tray, wherein the profile structure preferably is arranged in the side surfaces of at least one transverse side and/or of at least one longitudinal side facing away from the receiving area, and wherein the profile structure preferably forms a box profile and/or a honeycomb profile. By providing a profile structure, crash structures in particular can be created that absorb any forces that may arise in the event of a vehicle accident and protect the battery cells and/or the battery modules arranged in the battery tray. In particular, the design of the profile structure as a box profile or honeycomb profile has proven to be advantageous in terms of casting production. These crash structures are preferably represented by "sliders" in the die casting process.

According to another preferred embodiment, the battery tray is cast in one piece from an aluminum alloy, wherein the aluminum alloy is preferably an AlSi aluminum alloy. In practice, it has been found that the use of an AlSi aluminum alloy results in a battery tray with preferred static and dynamic properties, while at the same time providing a reduced weight.

A further advantageous embodiment of the invention is characterized in that the circumferential frame structure, in particular a first transverse side of the circumferential frame structure, has at least one inlet and/or at least one outlet, preferably at least two outlets, and in that the at least one inlet and/or the at least one outlet are fluidically connected to the heat exchanging channels arranged in the bottom plate for the circulation of cooling fluid and/or heating fluid in the heat exchanging channels. This enables a favorable connection of the battery tray to a cooling circuit for cooling the battery modules and/or to a heating circuit for heating the battery modules arranged in the battery tray from a design point of view.

According to a second aspect of the present invention, aforementioned problem is solved by an aforementioned method for manufacturing a battery tray, in particular an aforementioned battery tray for receiving at least one battery cell serving as a drive energy storage device for an electrically driven vehicle, wherein the battery tray comprises a heat exchanging structure, wherein the heat exchanging structure is formed as a battery bottom plate comprising at least one heat exchanging channel.

Hereby, a manufacturing method is provided which enables a high efficiency. Additionally, cast battery tray may be provided which comprise tight tolerances, a smooth surface, and good mechanical properties. Additionally, the advantages and features described in context with the battery tray apply equally to the method for low pressure die casting a battery tray.

For enabling a beneficial casting process, the battery tray may be manufactured in a low pressure die casting process, a core package casting process or in a combination of both.

According to another preferred embodiment, a plurality of jacket cores is arranged in the mold for casting the at least one heat exchanging channel in a battery bottom plate of the battery tray. By arranging the plurality of jacket cores in the mold, the at least one heat exchanging channel may be provided in the cast part in a beneficial way. The plurality of jacket cores in particular extend in a longitudinal direction, so that a plurality of canals may be provided in the battery tray. Preferably, the plurality of jacket cores are arrange such in the mold that they extend longitudinally into the direction of the width of the battery tray.

According to another preferred embodiment, the cast battery tray at least partly comprises a thin wall structure, wherein the thin wall structure comprises a wall thickness between 1 mm and 6 mm, preferably between 2 mm and 5 mm, more preferably between 3 mm and 4 mm. It is preferred that substantially all wall thicknesses of the entire battery tray lie in the aforementioned thickness range. Through casting the battery tray in one piece, in particular in a low pressure die casting method, said thin wall thicknesses may be enabled and thus a very light battery tray may be provided by still providing sufficient mechanical properties. It is further preferred that the wall thicknesses of the longitudinal sides and/or the wall thicknesses of the transverse side comprise the aforementioned wall thickness ranges.

The exemplary embodiments described in this description are also intended to be disclosed with respect to every aspect and in all combinations with one another. In particular, a method step is intended to also disclose respective means for performing the method step. Likewise, means for performing a certain method step are also intended to disclose the respective method step.

Further advantageous exemplary embodiments of the invention are indicated by the following detailed description of a number of practical examples of the present invention, in particular in connection with the figures.

The figures attached to the application, however, are only intended to be used for the purpose of clarification, and not to determine the scope of protection of the invention. The attached drawings are intended only as examples reflecting the general concept of the present invention. In particular, features shown in the figures should not in any way be considered an essential component part of the invention.

In the following, the invention will be described in more detail with reference to the figures.
- Fig. 1: a schematic view of an embodiment of a battery tray in a perspective top view;
- Fig. 2: a schematic view of the embodiment shown in Fig. 1 in a perspective bottom view; and
- Fig. 3: a schematic front view of the embodiment shown in Fig. 1.

In the following description of the various embodiments according to the invention, components and elements with the same function and the same mode of operation are provided with the same reference symbols, even if the components and elements may differ in their dimensions or shape in the various embodiments.

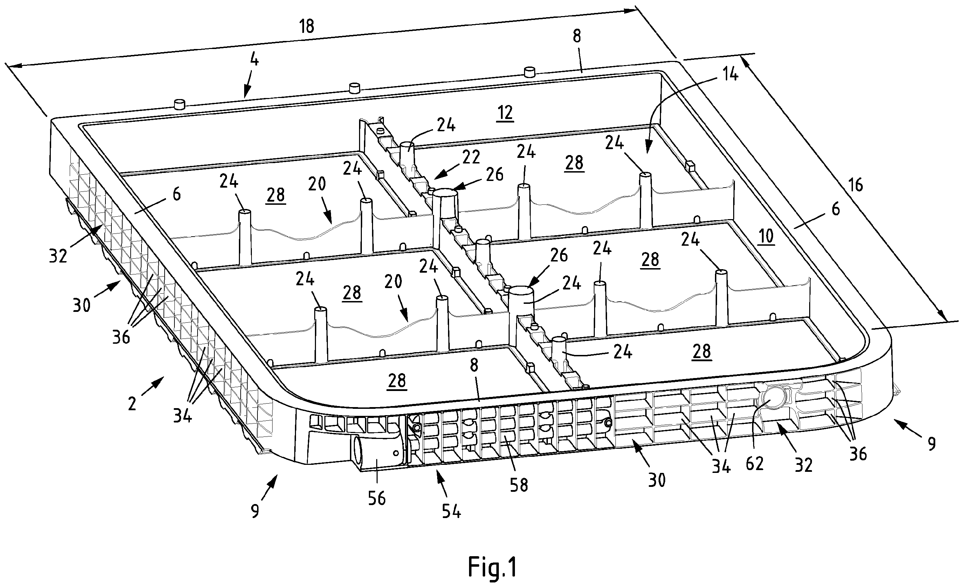

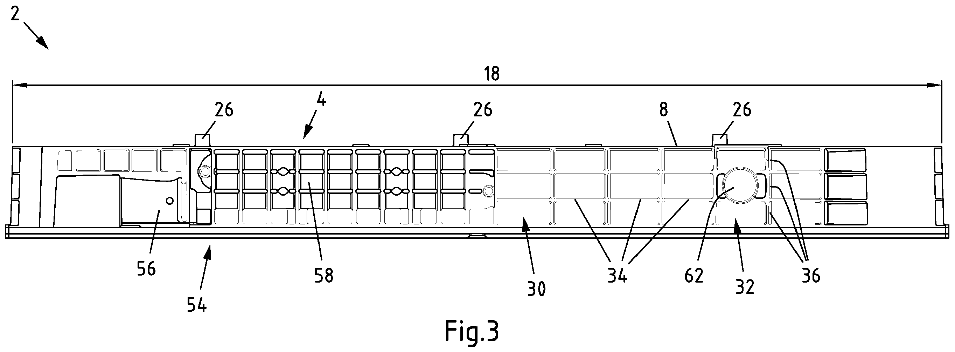

Figs. 1 to 3 show schematic views of a first embodiment example of a battery tray 2 for holding at least one battery module serving as a drive energy storage device for an electrically powered vehicle.

The battery tray 2 has a circumferential frame structure 4, wherein the circumferential frame structure 4 has two longitudinal sides 6 and two transverse sides 8. The battery tray 2 is preferably cast in one piece from a light metal material, in particular from an aluminum alloy. Preferably, a receiving area 14 spanned between the inner sides 10 of the longitudinal sides 6 and the inner sides 12 of the transverse sides 8 has an area of at least 0.5 m², in particular of at least 0.75 m², particularly preferably of at least 1 m². In this context, it is preferable if the longitudinal sides 6 have a length 16 of greater than 1 m, in particular greater than 1.2 m, particularly preferably greater than 1.5 m, and the transverse sides 8 have a length 18 of greater than 1 m, in particular greater than 1.25 m, particularly preferably greater than 1.4 m. Furthermore, curved transition areas 9 are arranged between the front transverse side 8 and the longitudinal sides 6. Preferably, the battery tray 2 is build as a thin wall structure, wherein the wall thickness of substantially the whole battery tray 2 is in a range between 1 mm and 6 mm, preferably between 2 mm and 5 mm, more preferably between 3 mm and 4 mm.

Two transverse beams 20 run between the longitudinal sides 6 essentially parallel to the transverse sides 8. Likewise, a longitudinal beam 22 runs between the transverse sides 8 essentially parallel to the longitudinal sides 6. The transverse beams 20 and the longitudinal beam 22 have a plurality of cylindrical connecting sections 24, two connecting sections 24 being arranged in intersection regions 26 between transverse beams 20 and longitudinal beam 22. A total of six areas 28 for mounting battery cells and/or battery modules are formed by the transverse beams 20 and the longitudinal beam 22.

The side surfaces 30 of the longitudinal sides 6 and of the transverse sides 8 have a profile structure 32 for stiffening the battery tray 2. It can be seen that both the side surfaces 30 of the longitudinal side 6 as well as the side surfaces 30 of the transverse side 8 of the battery tray 2 form a box profile. The profile structures 32 are composed of horizontally extending profile webs 34 and vertically extending profile webs 36.

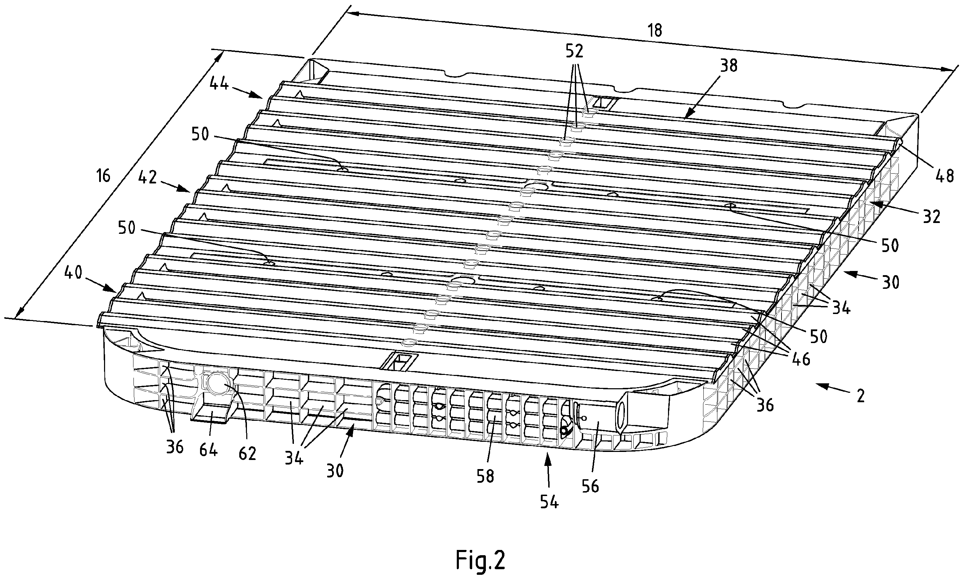

As depicted in particular in Fig. 2, the battery tray 2 comprises a battery bottom plate 38 as a heat exchanging structure, wherein the battery bottom plate 38 comprises the heat exchanging channels 40, 42 and 44. The heat exchanging channels 40, 42 and 44 are meander-shaped and comprise a plurality of canals 46 which extend over the entire width of the battery tray 2 and/or the battery bottom plate 38. The heat exchanging channels 40, 42 and 44 are fluidly not connected in the cast battery tray 2. Nonetheless, they may be fluidly connected by external/separate parts. Both sides of the end faces of the canals 46 are respectively closed via a separate part 48. The heat exchanging channels 40, 42 and 44 are separated from each other by a plurality of apertures 50. Said apertures 50 for example serve as connecting apertures 50 to the receiving area 14 of the battery tray 2. Additionally, a plurality of openings 52 is arranged in the canals 46, in particular in the middle of the bottom surface of each canal 46.

The front transverse side 8 further comprises a radiator structure 54, wherein the radiator structure 54 comprises a pump housing 56 and a heat exchanging element 58, wherein the heat exchanging element 58 is formed by meander-shaped heat exchanging channels 58. The radiator structure 54 is formed integrally in the side surface 30 of the front transverse side 8 facing away from the receiving area 14.

Additionally, the front transverse side 8 comprises a passage 62 for arranging means for electrically connecting at least one battery cell arranged in the receiving area 14.

Additionally, the battery tray 2 comprises connecting means 64 for connecting the battery tray 2 to the body of a vehicle.

The exemplary embodiments/aspects of the present invention described in this specification are intended to be understood as disclosed both individually and in all combinations with each other. In particular, even the description of a feature encompassed by an embodiment - unless explicitly stated to the contrary - is not intended to be understood herein as implying that the feature is indispensable or essential to the function of the embodiment. The sequence of the process steps described in this specification is not mandatory; alternative sequences of the process steps are conceivable. The process steps can be implemented in various ways, for example, implementation in software (by program instructions), hardware or a combination of both is conceivable for implementing the process steps.

Terms used in the patent claims such as "comprising", "having", "including", "containing" and the like do not exclude further elements or steps. The wording "at least in part" or "substantially" covers both the case "in part" and the case "in full". The phrase "and/or" is intended to be understood to disclose both the alternative and the combination, thus "A and/or B" means "(A) or (B) or (A and B)". A plurality of entities, persons or the like means multiple entities, persons or the like in the context of this specification. The use of the indefinite article does not preclude a plural. A single device may perform the functions of multiple units or devices recited in the claims. Reference signs indicated in the patent claims are not to be regarded as limitations of the means and steps employed.

### Reference sign list

- 2: battery tray
- 4: frame structure
- 6: longitudinal side
- 8: transverse side
- 9: transition area
- 10: inner side of the longitudinal area
- 12: inner side of the transverse area
- 14: receiving area
- 16: length of the longitudinal side
- 18: length of the transverse side
- 20: transverse beam
- 22: longitudinal beam
- 24: cylindrical connecting sections
- 26: intersection regions
- 28: areas for mounting battery cells and/or battery modules
- 30: side surface
- 32: profile structure
- 34: horizontally extending profile web
- 36: vertically extending profile webs
- 38: battery bottom plate
- 40: heat exchanging channel
- 42: heat exchanging channel
- 44: heat exchanging channel
- 46: canal
- 48: separate part
- 50: aperture
- 52: opening
- 54: radiator structure
- 56: pump housing
- 58: heat exchanging element
- 62: passage
- 64: connecting means

## Claims

1. Battery tray for receiving at least one battery cell and/or at least one battery module serving as a drive energy storage device for an electrically driven vehicle, wherein the battery tray (2) is connectable to a body of the vehicle, the battery tray (2) comprising:
- a substantially circumferential frame structure (4) comprising longitudinal sides (6) and transverse sides (8) for forming a receiving area (14) for the at least one battery cell,
- wherein the battery tray (2) is formed in one piece from a light metal material, in particular cast in one piece from a light metal material;
- wherein the receiving area (14) comprises an area of at least 0.5 m², preferably of at least 0.75 m², more preferably of at least 1 m²,
**characterized in that**
- the battery tray (2) comprises a heat exchanging structure, wherein the heat exchanging structure is formed as a battery bottom plate (38) comprising at least one heat exchanging channel (40, 42, 44).

2. Battery tray according to claim 1,
- wherein the battery tray (2) at least partly comprises a thin wall structure
wherein the thin wall structure comprises a wall thickness between 1 mm and 6 mm, preferably between 2 mm and 5 mm, more preferably between 3 mm and 4 mm.

3. Battery tray according to claim 1 or 2,
- wherein the at least one heat exchanging channel (40, 42, 44) is arranged in the battery bottom plate (38) in a meander-shaped form,
- wherein the at least one heat exchanging channel (40, 42, 44) preferably extends over substantially the entire width of the battery bottom plate (38).

4. Battery tray according to claim 3,
- wherein the at least one heat exchanging channel (40, 42, 44) comprises a plurality of canals (46), preferably extending substantially parallel to the at least one transverse side (8),
- wherein the plurality of canals (46) preferably extends over substantially the entire width of the battery bottom plate (38), and/or
- wherein the end faces of the plurality of canals (46) preferably are open.

5. Battery tray according to claim 3 or 4,
- wherein at least two heat exchanging channels (40, 42, 44), in particular at least three heat exchanging channels (40, 42, 44), are arranged in the battery bottom plate (38), and
- wherein the at least two heat exchanging channels (40, 42, 44), in particular the at least three heat exchanging channels (40, 42, 44), are fluidly not connected to each other.

6. Battery tray according to one of the claims 1 to 6,
- wherein the frame structure (4), in particular at least one of the transverse sides (8), comprises a radiator structure (54),
- wherein the radiator structure (54) is integrally formed with the frame structure (4), in particular with at least one of the transverse sides (8).

7. Battery tray according to claim 6,
- wherein the radiator structure (54) comprises at least one pump housing (56) and at least one heat exchanging element (58), and
- wherein the at least one heat exchanging element is formed by at least one meander-shaped heat exchanging channel (58).

8. Battery tray according to claim 6 or 7,
- wherein the radiator structure (54) is integrally formed in the side surface (30) of the frame structure (4), in particular in the side surface (30) of the transverse side (8), facing away from the receiving area (14).

9. Battery tray according to one of the claims 1 to 8,
- wherein the frame structure (4) comprises at least one passage (62) for arranging at least one device, in particular connecting means for electrically connecting the at least one battery cell.

10. Battery tray according to one of the claims 1 to 9,
- wherein the battery tray (2) comprises at least one transverse beam (8) and/or at least one longitudinal beam (6) for stiffening the battery tray (2) and/or for connecting the battery tray (2) to the body of the vehicle; and
- wherein the at least one transverse beam (20) preferably extends essentially parallel to at least one transverse side (8) and/or the at least one longitudinal beam (22) extends essentially parallel to at least one longitudinal side (6).

11. Battery tray according to one of the claims 1 to 10,
- wherein the frame structure (4) at least partly comprises a profile structure (32) for stiffening the battery tray (2),
- wherein the profile structure (32) preferably is arranged in the side surfaces (30) of at least one transverse side (8) and/or of at least one longitudinal side (6) facing away from the receiving area (14), and
- wherein the profile structure (32) preferably forms a box profile and/or a honeycomb profile.

12. Battery tray according to one of the claims 1 to 11,
- wherein the battery tray is cast in one piece from an aluminum alloy,
- wherein the aluminum alloy is preferably an AlSi aluminum alloy.

13. Method for manufacturing a battery tray, in particular a battery tray according to one of the claims 1 to 12, for receiving at least one battery cell and/or battery module serving as a drive energy storage device for an electrically driven vehicle, wherein the battery tray is connectable to a body of the vehicle, the method comprising:
- Feeding molten metal into a crucible through at least one feeding port,
- Heating the at least one molten metal fed into the crucible to keep the metal in a molten state,
- Pressurizing the crucible filled with the molten metal so that the molten metal is forced into a mold cavity via at least one riser tube,
- Upholding the pressurization of the crucible until the molten metal in the mold is substantially solidified, and
- Opening the mold and ejecting the cast battery tray via ejector pins from the mold,
- wherein the battery tray comprises a substantially circumferential frame structure comprising longitudinal sides and transverse sides for forming a receiving area for the at least one battery cell, and
- wherein the receiving area comprises an area of at least 0.5 m², preferably of at least 0.75 m², more preferably of at least 1 m²,
**characterized in that**
- wherein the battery tray comprises a heat exchanging structure, wherein the heat exchanging structure is formed as a battery bottom plate comprising at least one heat exchanging channel.

14. Method according to claim 13,
- wherein a plurality of jacket cores is arranged in the mold for casting the at least one heat exchanging channel in a battery bottom plate of the battery tray.

15. Method according to claim 13 or 14,
- wherein the cast battery tray at least partly comprises a thin wall structure, wherein the thin wall structure comprises a wall thickness between 1 mm and 6 mm, preferably between 2 mm and 5 mm, more preferably between 3 mm and 4 mm.

## Amended claims

### Amended claims in accordance with Rule 137(2) EPC.

1. Battery tray for receiving at least one battery cell and/or at least one battery module serving as a drive energy storage device for an electrically driven vehicle, wherein the battery tray (2) is connectable to a body of the vehicle, the battery tray (2) comprising:
- a substantially circumferential frame structure (4) comprising longitudinal sides (6) and transverse sides (8) for forming a receiving area (14) for the at least one battery cell,
- wherein the battery tray (2) is formed in one piece from a light metal material, in particular cast in one piece from a light metal material;
- wherein the receiving area (14) comprises an area of at least 0.5 m², preferably of at least 0.75 m², more preferably of at least 1 m²,
- the battery tray (2) comprises a heat exchanging structure, wherein the heat exchanging structure is formed as a battery bottom plate (38) comprising at least one heat exchanging channel (40, 42, 44),
**characterized in that,**
- the frame structure (4) comprises a radiator structure (54),
- the radiator structure (54) is integrally formed with the frame structure (4), and
- the radiator structure (54) comprises at least one pump housing (56).

2. Battery tray according to claim 1,
- wherein the battery tray (2) at least partly comprises a thin wall structure wherein the thin wall structure comprises a wall thickness between 1 mm and 6 mm, preferably between 2 mm and 5 mm, more preferably between 3 mm and 4 mm.

3. Battery tray according to claim 1 or 2,
- wherein the at least one heat exchanging channel (40, 42, 44) is arranged in the battery bottom plate (38) in a meander-shaped form,
- wherein the at least one heat exchanging channel (40, 42, 44) preferably extends over substantially the entire width of the battery bottom plate (38).

4. Battery tray according to claim 3,
- wherein the at least one heat exchanging channel (40, 42, 44) comprises a plurality of canals (46), preferably extending substantially parallel to the at least one transverse side (8),
- wherein the plurality of canals (46) preferably extends over substantially the entire width of the battery bottom plate (38), and/or
- wherein the end faces of the plurality of canals (46) preferably are open.

5. Battery tray according to claim 3 or 4,
- wherein at least two heat exchanging channels (40, 42, 44), in particular at least three heat exchanging channels (40, 42, 44), are arranged in the battery bottom plate (38), and
- wherein the at least two heat exchanging channels (40, 42, 44), in particular the at least three heat exchanging channels (40, 42, 44), are fluidly not connected to each other.

6. Battery tray according to one of the claims 1 to 5,
- wherein at least one of the transverse sides (8) comprises a radiator structure (54),
- wherein the radiator structure (54) is integrally formed with at least one of the transverse sides (8).

7. Battery tray according to one of the claims 1 to 6,
- wherein the radiator structure (54) comprises at least one heat exchanging element (58), and
- wherein the at least one heat exchanging element is formed by at least one meander-shaped heat exchanging channel (58).

8. Battery tray according to claim 6 or 7,
- wherein the radiator structure (54) is integrally formed in the side surface (30) of the frame structure (4), in particular in the side surface (30) of the transverse side (8), facing away from the receiving area (14).

9. Battery tray according to one of the claims 1 to 8,
- wherein the frame structure (4) comprises at least one passage (62) for arranging at least one device, in particular connecting means for electrically connecting the at least one battery cell.

10. Battery tray according to one of the claims 1 to 9,
- wherein the battery tray (2) comprises at least one transverse beam (8) and/or at least one longitudinal beam (6) for stiffening the battery tray (2) and/or for connecting the battery tray (2) to the body of the vehicle; and
- wherein the at least one transverse beam (20) preferably extends essentially parallel to at least one transverse side (8) and/or the at least one longitudinal beam (22) extends essentially parallel to at least one longitudinal side (6).

11. Battery tray according to one of the claims 1 to 10,
- wherein the frame structure (4) at least partly comprises a profile structure (32) for stiffening the battery tray (2),
- wherein the profile structure (32) preferably is arranged in the side surfaces (30) of at least one transverse side (8) and/or of at least one longitudinal side (6) facing away from the receiving area (14), and
- wherein the profile structure (32) preferably forms a box profile and/or a honeycomb profile.

12. Battery tray according to one of the claims 1 to 11,
- wherein the battery tray is cast in one piece from an aluminum alloy,
- wherein the aluminum alloy is preferably an AlSi aluminum alloy.

13. Method for manufacturing a battery tray, in particular a battery tray according to one of the claims 1 to 12, for receiving at least one battery cell and/or battery module serving as a drive energy storage device for an electrically driven vehicle, wherein the battery tray is connectable to a body of the vehicle, the method comprising:
- Feeding molten metal into a crucible through at least one feeding port,
- Heating the at least one molten metal fed into the crucible to keep the metal in a molten state,
- Pressurizing the crucible filled with the molten metal so that the molten metal is forced into a mold cavity via at least one riser tube,
- Upholding the pressurization of the crucible until the molten metal in the mold is substantially solidified, and
- Opening the mold and ejecting the cast battery tray via ejector pins from the mold,
- wherein the battery tray comprises a substantially circumferential frame structure comprising longitudinal sides and transverse sides for forming a receiving area for the at least one battery cell, and
- wherein the receiving area comprises an area of at least 0.5 m², preferably of at least 0.75 m², more preferably of at least 1 m²,
**characterized in that**
- wherein the battery tray comprises a heat exchanging structure, wherein the heat exchanging structure is formed as a battery bottom plate comprising at least one heat exchanging channel.

14. Method according to claim 13,
- wherein a plurality of jacket cores is arranged in the mold for casting the at least one heat exchanging channel in a battery bottom plate of the battery tray.

15. Method according to claim 13 or 14,
- wherein the cast battery tray at least partly comprises a thin wall structure, wherein the thin wall structure comprises a wall thickness between 1 mm and 6 mm, preferably between 2 mm and 5 mm, more preferably between 3 mm and 4 mm.
